# EUROPEAN PATENT SPECIFICATION

(11) **EP 0 784 189 B1**
(45) Date of publication and mention of the grant of the patent: **04.04.2001**
(21) Application number: 96500005.2
(22) Date of filing: 11.01.1996
(51) Int. Cl.: F23G 5/24, F23J 15/02, F23G 5/46, F23G 5/16

(54) **System for controlled self-combustion of urban solid waste**
System zur eigenständigen Verbrennung von festem Stadtmüll
Système pour la combustion autonome de déchets municipaux solides

(43) Date of publication of application: 16.07.1997
(73) Proprietor: INCISUD, S.L., 28400 Collado Villalba, Madrid (ES)
(72) Inventor: Clementz, Roland, 28400 Collado Villalba, Madrid (ES)
(74) Representative: Polo Flores, Carlos

(56) References cited:
- WO-A-86/04257
- WO-A-86/05859
- CA-A- 1 023 619
- FR-A- 1 295 829
- GB-A- 2 261 057
- US-A- 4 936 231

## Description

### AIM OF THE INVENTION

The invention is a system of controlled self-combustion of urban solid waste. It is a system which consists of a small unit capable of incinerating approximately one ton of urban solid waste per hour. It produces hot water or air, cleans gases and recycles the cleaning water at the same time retrieving metals and glass for recycling.

The system, apart from a self-combustion oven, includes an exchanger which forms part of the said oven, a system for pre-heating the urban solid waste, a post-combustion chamber, a combined system for cooling and cleaning gases, collecting floating dust and ash as well as neutralizing acids and retrieving water by condensing the vapor contained in the gases and smoke. It also includes a combined water recycling system which separates and dries sludge which is produced when the smoke is cleaned, and finally it also includes a method of retrieving the slag as well as the means to recycle metals and glass.

### BACKGROUND OF THE INVENTION

Large capacity systems for incinerating urban solid wastes are known, whilst small incinerating machines or systems function in a discontinuous way, with the disadvantages and problems which that entails.

Under such circumstances small municipalities with a population of less than 20,000, since they do not produce sufficient waste to be equipped with these large volume incineration systems, have to dispose of the waste they produce either by transporting it long distances, to a place where there is a large capacity incinerator, or else the waste has to be burned in machines which work discontinuously.

It should be noted that the application WO-A-8 605 859, consisting of a sludge and urban waste incinerator, which, while it plans for the combustion of the gasses produced by the refuse to avoid doors, essentially conserves the problems previously described for small capacity incinerators.

More specifically, the gasses produced during combustion are destroyed by incineration to ensure the suppression of the emission of odours during the mixture, drying, and recovery of these gasses using a moist washer made up of a Venturi that increases the capture of dust carried by this smoke, lacking means to provide heat to the waste combustion chamber and means of permitting the continuous operation of the incinerator.

As a result, it is plain to see that large incineration plants or systems have a very complex way of working and the resulting logistics are complicated and highly expensive, whilst small incinerators are made of heat resistent brick flooring and are not fitted with a smoke cleaning system.

The greatest disadvantage of these kinds of small incinerators is the incineration of urban solid wastes in a discontinuous way, which implies various, important and successive changes of temperature at combustion chamber level, resulting essentially in the wear of all or part of the brick pavement, which gives rise to large costs and to the stoppage of the plant for the time needed to carry out the appropriate repairs.

One has to add to this the fact that this type of small capacity incinerator uses external energy such as gas or diesel oil for the combustion of the waste.

It must also be pointed out that normally the type of incinerators which we have referred to previously do not pre-heat or previously dry the waste, nor do they have post-combustion chambers where the gases have to be maintained at high temperatures for some time, nor do they have a gas purification, sludge recycling and retrieval system.

All of these problems and disadvantages have led the applicant to design a system for incinerating urban waste.

### DESCRIPTION OF THE INVENTION

The proposed system has been conceived to solve the problems mentioned in the above paragraph, and is based on a system which consists of an incineration machine or plant with a self-combustion chamber, which is generally cylindrical in shape and is positioned vertically with its two bases leading into conical sections, in such a way that preheated air is injected through the lower section into the oven in the cylindrical part, whilst the upper conical trunk section is prepared for the escape of the smoke and the load from the chamber or oven itself.

The above mentioned upper conical trunk section includes a kind of loading cart in which the scrap or waste to be incinerated is previously dried by the same gases and smoke which escape through the upper conical section of the oven.

The above mentioned upper conical section is also connected to a post-combustion chamber where the gases which escape from the self-combustion chamber are heated to 800-900°C, so making use of this heating of the gases to heat the air which is injected into the oven through the lower conical section, which is why that air is called combusting air and it is pushed by means of a ventilator.

The hot gases are then cooled in a cooling tower and cleaned with some projecting nozzles which spray water on one side, and with an exchanger round this tower which uses part of the heat of the gases to heat the combusting air to approximately 150/200°C.

Coming out of the tower there is a turbo-cleaner extractor which pushes gases into a cyclone to remove dust, retrieve and save water, and which has a chimney at the top to evacuate smoke into the atmosphere. At the bottom it leads to a tank with a labyrinthine passage where the sludge is deposited.

The clean water resulting from the separation of the sludge is re-injected by means of a pump to the cooling tower and washed as previously mentioned.

In order to compensate the loss of water through evaporation, the water level is maintained permanently by means of a faucet with a floating device.

The sludge is gathered in a big container with a heat exchanger, with the aim of drying it before hardening it.

Finally, the incinerated waste is collected, after a door has been opened in the lower part of the lower conical section of the combustion oven, in a container where there is a vibrating sieve which lets the ash through and retains the metals and the glass for recycling.

The plant which consists of the system which has been described, includes a kind of loading cart in which the scrap and waste to be incinerated are previously dried by the same gases and smoke which come out through upper conical section of the oven.

The need to reach 700/1000°C during combustion means the furnace has to be provided with energy: the easiest and most economical way is to pre-heat the combusting air using part of the heat from the combustion itself.

On the other hand, the combusting air pushed into the oven by a ventilator is pre-heated by means of an exchanger using part of the heat of the combustion gases circulating from top to bottom around the combustion chamber and the lower conical section area, thus improving the mechanical resistance of the oven plates by cooling, supplying a source of energy for the furnace as well as provoking good thermal isolation of the self-combustion chamber.

In order to limit the increase in temperature at the heart of the oven, an exchanger has been conceived which is based on grilles through which a cold fluid circulates (water or air), and which also protects these bars and produces energy which can be recovered.

The cleaning water is mixed with soda ensuring the capture of floating ash and the neutralization of acid and chlorinated compounds. The ph is maintained constant by means of an automatic ph level indicator linked to a dispensing pump.

With regard to the cyclone where the mix of gases/water takes place, this cyclone is made of a double wall and between the two walls there is a spiral which allows the circulation of cold water to cool the inner wall of the cyclone. The wall, once cold, has a power of attraction for particles. This power of attraction which is added to the centrifugal force generated by the speed of the said mix in the cyclone itself increases the adherence of the said particles to the cold wall and allows condensation of the vapor contained in the gases. At the same time the water which circulates in the double wall is heated and gives us an extra source of energy.

The invention of a double wall cyclone permits improving the efficiency in capturing small sized aerosols (greater than 5 micras), in the heart of the cyclone itself by means of thermoferesis (a physical phenomenon unknown until now). And on the other hand, the phenomenon of condensation permits saving an important part of the water, besides the fact that the greatest inconvenience of conventional cyclones was the accumulation of particles in the entrance to the cyclone. Of course, this phenomenon disappears with the above mentioned double wall cyclone.

The most advantageous shape of the cyclone which forms part of the system of the invention, is one which includes a tangential entrance which clearly favors the rotation of the fluid in the interior. The geometries of the shape of the entrance of the fluid may be different, as may the shapes of the inferior part of the cyclone as well as the diameter and the height of the corresponding chimney, all of this in accordance with the kind of work required and the application desired.

In the inside of the double wall there is, principally, a helix which permits increasing the time which the fluid is present circulating in the double wall, increasing the contact time and obtaining an improvement in the transference of heat between the walls. The helix also permits better distribution of the weight of the fluid which circulates inside of the double wall.

The system of supplying the fluid charged with the micro-particles to be eliminated is directly connect to a network. The micro-particles may be of different sizes and nature.

The installation described permits treating a fluid, particularly a gaseous fluid in a continuous manner, so that besides removing the dust, the condensation or the conditioning of the fluid to be treated or the purification of a fluid charged with pollutants by a chemical or physical reaction may also be treated.

Two important configurations appear. One, considered as the main one, consists in causing a fluid to circulate in the double wall. The temperature of the fluid is much lower than that of the fluid to be treated whose temperature may decrease and increase. The temperature of the fluid is variable according to the exchange surface to which it pertains, the nature and the temperature of the coolant, the flow of fluid which circulates in the double wall.

This process may, then, play a double role of heat separator-exchanger.

Also worth mentioning is the fact that the use of the double wall in the cyclone permits improving the efficiency in capturing small-sized aerosols in the heart of the cyclone by thermoferesis as was stated previously in such a way that this physical phenomenon intervenes if the thermal gradient between the wall of the cyclone and its center is strong enough, in a thermal gradient, a particle moves then from the region of the highest temperature to that of the lowest temperature.

On the other hand, the cooling of the internal walls of the body of the cyclone prevent the dust collected in the collection chamber from sticking, in such a way that this property does not modify the geometry of the cyclone during the working time and reduces to a minimum the cost of functioning.

Similarly, the condensation of the vapor on the walls of the cyclone form a liquid film on the collection walls and avoids, among other things, a new circulation and the bouncing of the collected particles on the internal surface of the cyclone.

In summary, the cyclone may combine separation and condensation (evaporation) in the same area.

If one or several physical or chemical reactions are verified in the body of the cyclone, the possibility of increasing or decreasing the temperature of the transmitting fluid permits increasing the kinetic reactionals.

We should also point out the fact that the installation may include, in the body of the cyclone, electronic means for increasing the results of the purification systems, in such a way that the action of the electrostatic effects is susceptible to favor the attraction of dust in the cyclone.

Furthermore, the installation is complemented with a separator of drops with a double wall which is located following the turbo-washer-extractor, that is, immediately in front of the cyclone, in such a way that the said separator of drops constitutes an economizer of water. Its double wall facilitates the condensation of water and, on the other hand, a fixed helix incorporated in the entrance, obligates the gases to enter in a centrifugal manner, cooled without interruption by a circumferential circulation of cold water, in order to provoke a maximum of condensation of the vapor from the gases.

It is possible to see that the system we have described offers a series of characteristics not foreseen in other conventional systems, and which can be summarized in the following way:
- There is pre-heating of the combusting air.
- There is a replaceable grilled hot water exchanger in the furnace.
- There is a regulation of the combusting air by means of a thermo-coupling ventilator.
- There is a continuous loading system with means to dry the waste.
- It has a post-combustion chamber in which the gases are kept more or less at 850°C at least for 2 seconds.
- It includes a turbo-cleaner-extractor.
- It has a combined gas cooling/cleaning system with an exchanger which uses part of the heat of the gases to heat the combusting air whilst it cools them.
- That combined system of cooling/cleaning activates the gas turbo-cleaner-extractor as well as a dust removing cyclone with a double wall and the circulation of cold water to improve the capture of dust and facilitate the condensation of the vapor, with the aim of retrieving the maximum amount of water and furthermore obtaining hot water.
- It has the means to recycle water and decant sludge, whilst retrieving both, and it includes, at the same time, a drier-collector.
- It also has the means to sift slag, retrieving metals and glass.

The system, although it is designed for small scale treatment or incineration of solid urban waste, could also be used to destroy waste in industrial quantities.

Regarding the system for cleaning gases and the resulting means for recovering energy, these can be applied to any boiler or burner, that is to say that it may or may not be applied to the burning of waste as explained in this description.

To summarize, the advantages offered by the installation which make up the system of the invention, are as follows:
- Small capacity: less than 1 Tm/hour, maximum 20 T. per day.
- On the spot treatment of solid urban waste on a small municipal level, eliminating the high costs of transportation logistics.
- Continuous loading of rubbish and its pre-drying.
- Cleaning of gases with water and soda.
- Recycling of cleaning water and retrieval of water through vapor condensation.
- Energy, hot water and air retrieval for domestic or agricultural uses, swimming pools, shopping centers, etc.
- Retrieval of iron and glass for recycling purposes.
- Space required, 80m2 of ground. It therefore requires little civil engineering.
- Very affordable cost compared with other machines on the market.
- Little maintenance.
- Little mechanics.
- No oven mill.
- Low electricity consumption (it can be independent, using an electric generator)
- Does not require highly qualified staff for running.
- Quick installation; less than two weeks.
- Very low running costs, especially if we take into consideration the energy which can be retrieved, and the sale of the glass and scrap which can be recycled.
- The total yield of the system is 93,6 %. This is certified by a report from the C.N.R.S. (Centro Nacional de Investigación Científica)
- The installation complies with the legislation of the European Union, (certified by Bureau Veritas).

All these different advantages mean that this machine or installation is well adapted to small isolated municipalities which are difficult to get to and which have limited financial means.

### DESCRIPTION OF THE DRAWINGS

In order to complement the description which is being made and in order to help to better understand the characteristics of the invention, attached to this description, and as an integral part of it, there is a series of drawings in which by way of illustration, but without creating limitations, the following has been shown:

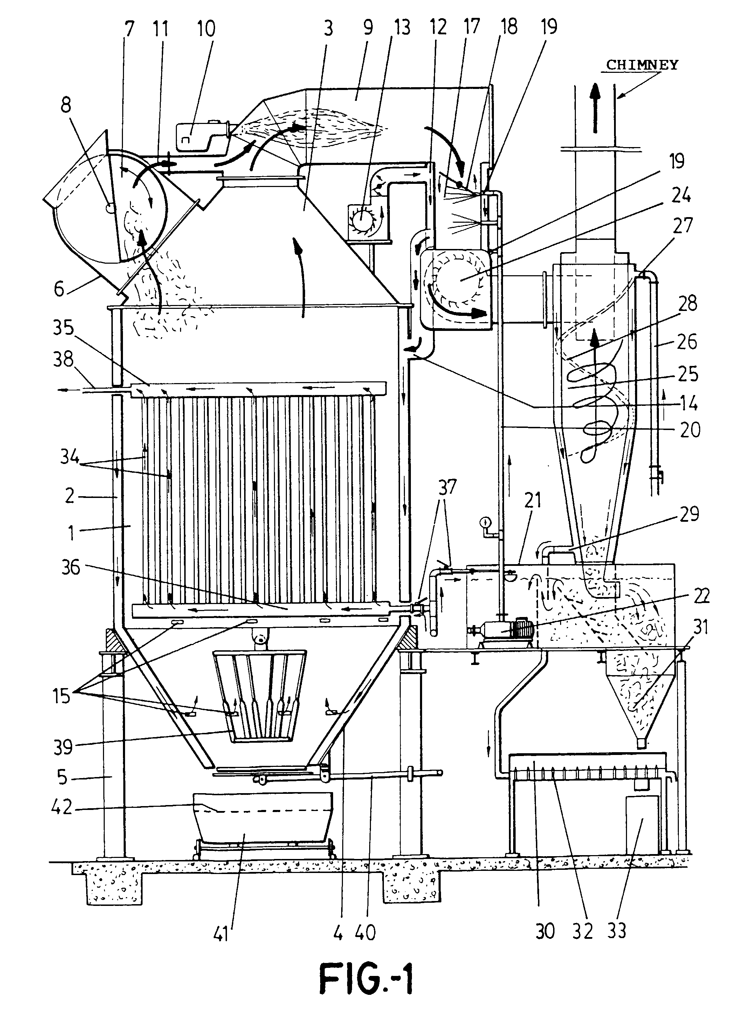

Figure 1.- Shows a schematic representation from a side elevation in cross-section of the installation which makes up the controlled self-combustion system of urban solid waste system, all of it done in accordance with the objective of the invention.

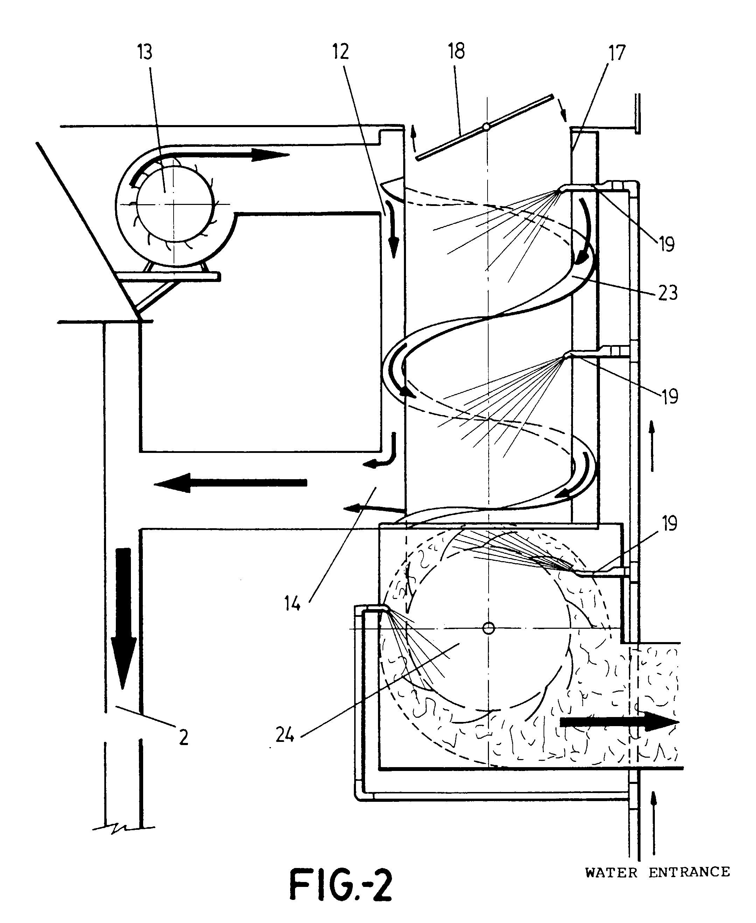

Figure 2.- Shows a representation of the part corresponding to the combusting air exchanger, where you can see with greater detail the elements and means which this exchanger has.

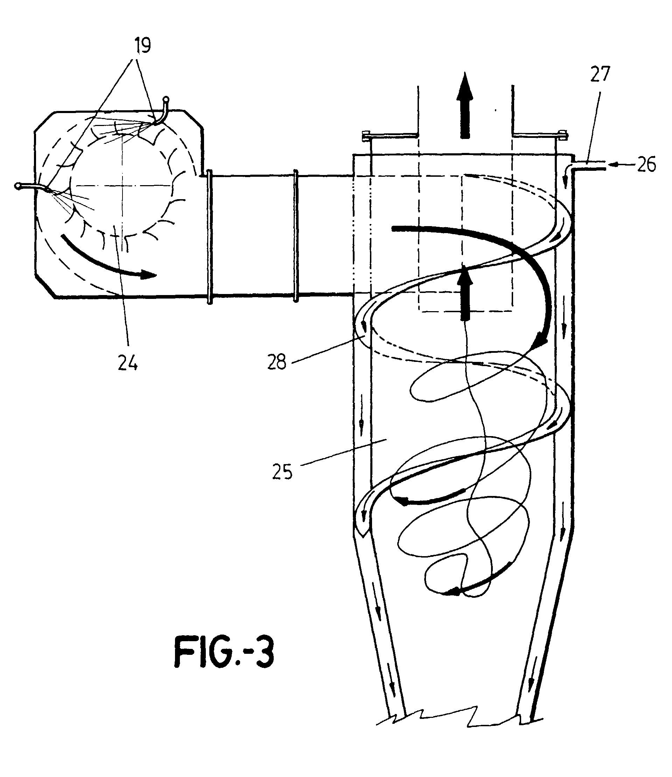

Figure 3.- Shows another view, also with greater detail, of the part which corresponds to the turbo-cleaner and dust remover/condenser cyclone, which also forms part of the installation shown in figure 1.
Figure 4.- Shows a representation in cross-section of the inlet for combusting air in the furnace or self-combustion chamber.
Figure 5.- Finally shows a detail in cross-section of the vibrating system of the sieve in the container which receives the refuse.
Figure 6.- Shows a representation in perspective, with a longitudinally sectioned part of the separator of drops or economizer of water which is located between the turbo-evaporator-extractor and the corresponding cyclone.
Figure 7.- Shows a schematic representation, also in a lateral elevation, according to a section, of the cyclone or double wall which forms part of the subject of the invention.
Figure 8.- Shows, finally, a detail in of the shape or geometric form of the entrance to the cyclone.

### PREFERRED USE OF THE INVENTION

In view of the commented figures, one may observe how the controlled self-combustion of solid urban waste, the purpose of the invention, has in the first place a combustion chamber or oven (1) which consists of a cylindrical vertical body with a double wall making a circumferential or annular passage (2), and the said chamber (1) extends at the top into a conical section (3), whilst at the bottom it extends into another conical section (4) with a double wall, creating continuity in the passage (2).

This chamber or oven as a whole is supported by two vertical pillars below (5), whilst above there is a loading mouth (6) where there is a kind of cart (7) fitted in a rotatory manner on an axis (8), and this kind of cart (7) has a semi-cylindrical form or shape which when it turns permits the loading of solid waste to be burnt and in another turn their unloading over the self-combustion chamber (1).

Over the mouth of the upper conical section (3) there is a post-combustion chamber (9) attached. It is horizontally situated and heat is applied by means of a burner (10). Gases reach it so that some of them, in accordance with the reference (11), pass through the loading zone (6) heating and pre-drying the waste to be burnt and contained in a kind of cart (7).

The gases which reach the post-combustion chamber (9) arrive there with a temperature of approximately 600/650°C, and are heated by the burner (10) to a temperature of approximately 800/900°C.

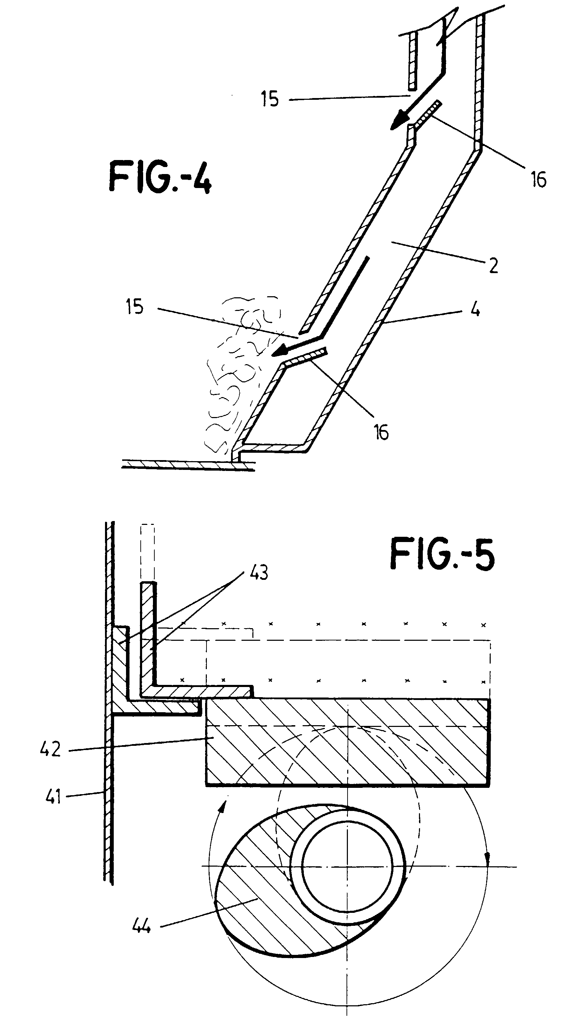

The combusting air is heated by the heat of the gases which go through the said chamber (9), reaching the inside of the oven or combustion chamber (1), by virtue of the fact that that air goes through a heat exchanger (12) and is pushed by means of a ventilator (13) reaching the entrance (14) of the passage (2) which surrounds the combustion chamber or oven (1), going to the lower cone (4), and the combusting air escapes through holes (15) on the side surface of the said lower conical section (4), all of that in order to improve the mechanical resistance of the plate by cooling, and also providing energy to the furnace and provoking good thermal isolation of the self-combustion chamber. Those essential outlets through the holes (15) have some plates (16) placed in an inclined position, and favor the exit towards the combustion chamber or oven itself and prevent the entry into the passage (2) of waste, all of this is clearly shown in the detail shown in figure 4.

The post combustion chamber (9) is connected to a vertical cooling and cleaning tower (17). The intersection zone of that post-combustion chamber (9) and that cooling and cleaning tower (17) has a tilting disc (18) which can close in order to heat the gases to 800-900°C as quickly as possible within the installation before the incineration of the rubbish takes place, so that once that disc (18) is open, those hot gases enter into the said tower (17), where, through nozzles or injectors (19), water from the piping (21) is sprayed and is sucked in from a lower tank (21) through a pump (22).

The combustion of the waste is carried out without the help of a burner; igniting this waste is done in a simple way with an ordinary piece of paper or cloth soaked in diesel oil through an opening situated at the door of the slag outlet. Closing the disc allows, not only a temperature of 850° to be reached in the only post-combustion chamber (as imposed by regulations), but also extends it to the upper part of the oven, which consequently pre-dries the rubbish in the ignition phase and increases the lower calorific power (LCP).

The cooling and cleaning of the gases which come from the post-combustion chamber (9) is necessary to facilitate the capturing of dust, floating ash and metal oxides. In that cooling and cleaning tower (17), which is vertical and cylindrical, the gases circulate from top to bottom and are cooled in two different ways. One way is by injecting cold water at various levels through the nozzles or injectors (19) mentioned above, and by this first cooling method particles are initially captured by coalescence with the numerous droplets from the sprayed water; the second cooling method is a temperature exchanger made of a plate casing shaped like a spiral (23), which situated between the double wall of the cleaning tower (17) allows the cold air created by the ventilator (13) to circulate and be heated to 150/200°C upon contact with the inner plate heated by the gases, at the same time as it cools them, in such a way that that preheated air is pushed by the ventilator (13) towards the passage (2) of the oven or combustion chamber (1).

In the cooling and washing chamber described, the thermal shock provoked has as its objective to capture the metallic oxides. In the chamber the temperature lowers from 900/950°C to 220/250°C, in such a way at this brusk change of temperature is very important, because the lower the temperature the better the heavy metals are absorbed. For this reason, the combination of the pulverization of water and the velocity of the gases permits obtaining, in the aforementioned washing tower, optimal results. Moreover, the retaining of the famous dioxides is much more efficient with the humid system described.

Going back to the cleaning of the gases which reach the tower (17), it has already been said that an initial cleaning is carried out by the water nozzles or injectors (19), followed then by another cleaning by a turbo-cleaner made up of a centrifugal turbine (24) which moves just by using the force of cleaning water, sucking the gases and mixing them perfectly with water and soda which come from the lower storage tanks (21), ensuring that the smallest particles and floating ash contained in the smoke are captured more efficiently, whilst the neutralization of the acid gases is undertaken by the soda and their cooling is continued.

At the turbo-cleaner-extractor outlet (24), the mix of the clean gases and the vaporized water charged with particles is expelled at high speed towards a cyclone (25), also made up of a double wall which cold water also has access to through a pipe (26) which enters at the top (27), with the peculiarity that between the two walls which form the body of the cyclone (25) there is a spiral (28) which circulates cold water to cool the internal wall of the cyclone (25) to the maximum and so attracts the smoke particles and provokes maximum condensation of the vapor. The mix of gases and sprayed water sent out obliquely in the cyclone moves with centrifugal force provoked by its own speed.

At the entrance of this cyclone (25) the gases and the vapor reach a temperature of approximately 300°C, cooling down upon contact with the wall of cold water, provoked by the condensation of the vapor contained in the smoke, thus really obtaining a significant saving of retrieved water.

At the same time, the current of cold water which circulates in the double cavity of the cyclone (25), is heated and allows the retrieval of a source of additional and free hot water.

That hot water comes out of the cyclone (25) through the pipes (29) which flow into a big container (30) for the retrieval of sludge.

Underneath, the cyclone (25) feeds into a container or tank (21) and through a series of plates positioned in a zigzag so that the sludge is decanted towards a lower tank (31), falling from this container (30), referred to above, which has a drier-exchanger (32) under which a sludge collector has been placed (33).

That is to say that, the water loaded with particles which come from the cyclone (25) goes along a zigzag route which allows the decanting of the particles to take place due to their own weight at the bottom of the tank (31), with the peculiarity that the water which has been separated from the particles reaches the cleaning tank or container (21) to be sucked up by the pump (22) and go round the cleaning circuit towards the cleaning tower (17) and the turbine (24), thus managing to stop any contaminated water from coming out and getting into contact with nature.

After decanting, the sludge is retrieved in the lower tank or container (30) which has an exchanger at the bottom (32), which is supplied by the hot water which comes from the installation, allowing the sludge to be dried before it is collected and taken out into safety tanks.

Returning to the self-combustion chamber or oven (1), it is itself made up of a double layer of heat-resistent stainless steel, itself containing a grille made of vertical tubes (34) which connect in an upper and common pipe (35) and another lower and common pipe (36) in such a way that cold water coming from the main water line is introduced through the pipe (37) in the common pipe (36). This cold water has access through the tubes which make up the grille (34), it reaches the upper pipe (35) and the water comes out hot through the outlet (38).

The circulation of cold water referred to above prevents destructive heating and excessive increase in temperature at the heart of the furnace or self-combustion chamber (1). In the same way the interchangeable grille forms a sort of interior chimney which improves combustion and the passage of gases. The circulation of water can be substituted by cold air from another ventilator which is separate from the first.

For its part the preheated combusting air which has an important role and whose heating is carried out by gases, allows combustion to be activated without lowering the temperature too much, thus ensuring the adjustment of the ventilator (13) by means of thermo-coupling which makes the ventilator work according to the temperature given by the combustion of the waste, which changes frequently depending on the quality of the waste, that temperature inside the oven or combustion chamber (1) depending on the lower calorific power of the waste itself, being able to momentarily reach more than 1,000°C.

In the same way the circulation of combusting air in the double casing or passage (2) of the combustion chamber (1), improves the resistance of the plate by quite a significant cooling, though still maintaining the temperature at between 800 and 900°C approximately. At the same time, the fact of being able to maintain the inner plate at a temperature of approximately 850°C, allows the stainless or heat resistent steel to play the role of thermal flywheel and because of its radiation will facilitate and make the ignition of the waste regular, since when solid waste is heated it first loses its moisture and then its volatile substances, which are distilled and decomposed into products with very simple molecules. Some of these products, simple gases, have a relatively high combustion point, their ignition temperature generally being between 250 and 600°C.

The thermal balance of the preheated layer of air which substitutes the brick oven mill will provoke thermal isolation from the air at room temperature, reducing heat loss due to irradiation through the plate.

Similarly the upper conical section (3) which leads to the post combustion chamber (9), will have to be lagged in a secure and constant way.

The post-combustion chamber itself (9), also of heat resistent stainless steel, will be lagged too, allowing the gases to remain in it for at least 2 seconds, with a minimum temperature of 850°C, with the peculiarity that such conditions are achieved with the thermo-coupled burner (10) allowing smells and germs to be destroyed in a safe way.

In the lower conical section (4) hangs a basket (39) for ventilating the furnace or combustion chamber (1); this basket prevents the tamping down of and the blockage of waste or slag which would limit the passage of the combusting air, whilst the bottom of this lower conical section (4) has a moveable door (40), whose opening causes the fall of slag and other objects, produced as consequence of the incineration, into a container or receiving tank (41), in which there is a sieve (42) which is vibrated so that the ash falls down and the glass and metals are separated, so that they can be extracted for subsequent recycling.

The sieve (42), as is shown in figure 4, is situated on one of the angular sections (43), so that through some cams (44), the way they turn will produce its elevation or lowering, and therefore the vibration of the sieve to separate the metals and the glass with the aim of being able to recycle them as was mentioned above.

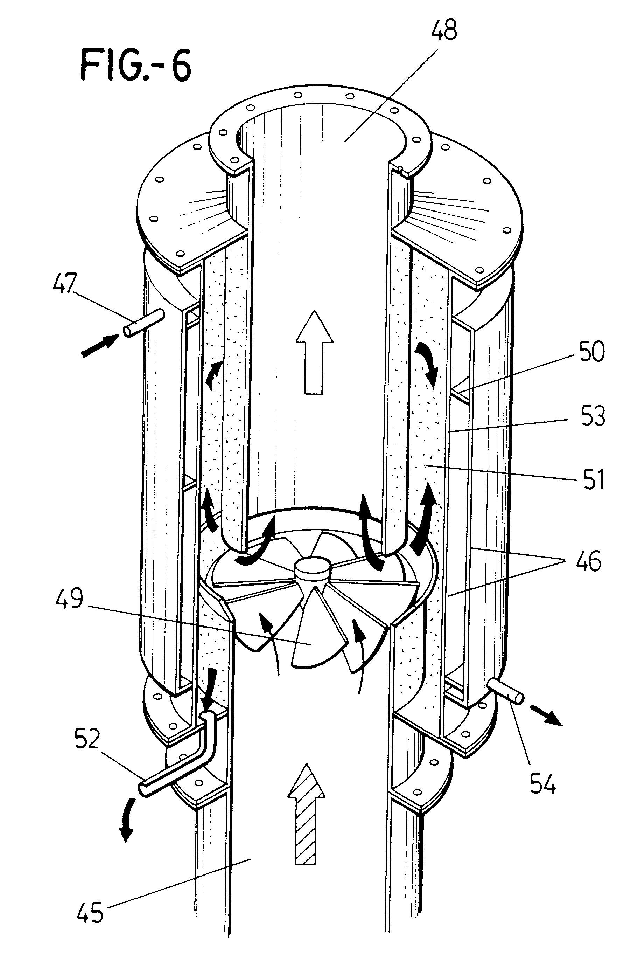

The installation may be complemented with a separator of drops/economizer of water, represented in figure 6, which is located between the turbo-washer-extractor (24) and the cyclone (25). The separator of drops is provided with an entrance (45), a double wall (46), an entrance of cold water (47), an exit (47), a helix or fixed helico-centrifugal wheel (49), at the entrance, a helix (50) for distribution of water located between the double wall (46), and a condensation chamber (51), with an exit (52) for condensed vapor.

The functioning of the said separator of drops/economizer of water is based on the principle of centrifugal force and the difference in inertia which exists between water gases and drops and solid particles, so that in the entrance (45) of the separator itself, with a cylindrical shape, a rotative movement is forced to the gases by the fixed helico-centrifugal wheel (49), so that the gases rotate in the condensation chamber (51), and, entering into contact with the internal wall (53), which is cooled by the circumferential circulation of cold water in the double wall (46), the corresponding condensation is produced, thus circulating the water from above to below. This circulation is facilitated by the helix (50) located between the double wall (46).

In this way, the drops are centrifuged and collected along the inner wall (53), and the liquid exits by means of gravity through the exit (52) and is evacuated towards the sludge decanting tank. This separator of drops/economizer of water, besides the elements referred to above, includes a corresponding exit (54) for the hot water.

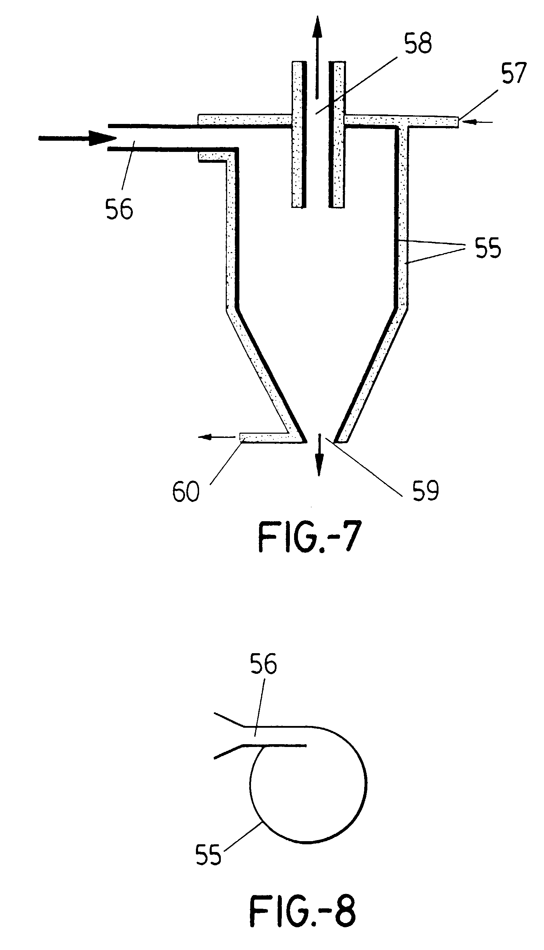

As for the aforementioned cyclone represented now schematically in figure 7, according to what is shown in that figure, it is composed of a double wall or casing (55), with an entrance (56) for the supply of fluid to be treated. The entrance (57) for the fluid which circulates inside the double wall (55) of the cyclone, the exit (58) with the means for passing the treated fluid, and the exit (59) with the means for passing the particles or the fluid charged with particles. The double wall (55) of the cyclone has an exit (60) for the fluid which circulates inside the double wall.

The use of the double wall in the cyclone described permits improving the efficiency in capturing the small-sized aerosols. This is realized by thermoferesis. At the same time the phenomenon of condensation, which is also produced in the cycle permits saving an important part of water, avoid, moreover, the accumulation of particles in the entrance and thus eliminating the greatest inconvenience of conventional cyclones.

Figure 8 shows how the corresponding entrance (56) referred to above, of the source to be treated, has a tangential placement with respect to the body (55) of the cyclone. This may also have various geometries, all depending on the application desired.

It is not considered necessary to make a longer description so that any expert on this subject may understand the scope of the invention and the advantages which can be derived from it.

The materials, shape, size and arrangement of the elements shall be liable to variation so long as it does not mean that there is a basic change in the invention according to the claims.

## Claims

1. Urban solid waste controlled self-combustion system, which being a small capacity installation for "on the spot" incineration of urban solid waste, producing hot water or air, cleaning gases with recycling of cleaning water and retrieval of metals and glass for recycling, said system including an oven or self-combustion chamber (1) with a double wall in a vertical position and with two conical-trunk sections as extensions of its walls one upper conical trunk section (3) for letting out smoke and gases as well as for letting in and drying the refuse to be burnt, and another lower conical trunk section (4) with a bottom which has a door that opens (40) for the evacuation of burnt refuse or slag which are collected in a receiving tank (41) which includes a vibrating sieve; the self-combustion taking place in the chamber (1) being heightened by a current of preheated combustion air taken from a circumferential temperature exchanger (12) positioned around a vertical gas cooling and cleaning tower (17) at the outlet of a post-combustion chamber (9) horizontally placed in the upper part of the exit cone (3); the chamber (1) combustion air being supplied by a ventilator (13) with access through a mouth (14) to a passage (2) formed by the double wall of the oven or chamber (1), the combusion air entering the combustion chamber through holes (15) in the lower cone (4); following the post-combustion chamber (9) there is a turbo-cleaner-extractor (24), at whose outlet there is a double cyclone which exits through a chimney whilst the water from the turbo-cleaner-extractor loaded with particles and dust feeds out into a decanting tank or container (31) where the sludge is gathered in a recipient or container (30) with an exchanger-drier (32) .

2. Solid urban waste controlled self-combustion system, according to claim 1, characterized because cold water from the network is made to go through the combustion chamber or oven (1), through a pipe (37), at entry into a common pipe (36) to a series of pipes (34) which feed out into a common pipe (35) through an outlet (38) with three objectives:
- To ensure the protection of the pipes themselves.
- To limit temperature increases in the furnace, and
- Furthermore to produce hot water which can be used for other purposes.

3. Solid urban waste controlled self-combustion system, according to claim 1, characterized because in the upper cone (3) a loading mouth (6) has been foreseen with a sort of cart (7) with a rotating semi-cylindrical shape on an axis (8), whose cart unloads the waste to be burnt towards the inside of the chamber (1), that waste being subjected, before entering the chamber, to heating and pre-drying by means of the gases which go up towards the post-combustion chamber (9).

4. Solid urban waste controlled self-combustion system, according to claim 1, characterized because the combusting air supplied into the oven by the ventilator (13) is pre-heated by means of an exchanger (12) using part of the heat of the combustion gases, and circulates from top to bottom around the combustion chamber and the lower cone, which results in the improvement of the mechanical resistance of the plate by cooling, supplying a source of energy to the furnace and provoking good thermal isolation of the self-combustion chamber.

5. Solid urban waste controlled self-combustion system, according to claim 1, characterized because the pre-heated combusting air which enters the combustion chamber (1) is pushed by a ventilator (13) thermo-coupled by the body of the oven itself allowing the temperature of the combustion and the excess air to be regulated in accordance with the lower calorific power of the refuse.

6. Solid urban waste controlled self-combustion system, according to claim 1, characterized because in the cooling and cleaning system, the gases are cooled in two different ways, one by injecting cold water into the tower (17) through nozzles (19), the other by a circumferential heat exchanger for this tower with cold air from the ventilator (13) which circulates and is heated by the gases upon contact with the heated inner plate as it cools them; there being also a turbo cleaner extractor and dust remover (24) which moves using the sole force of the cleaning water, sucking the gases and mixing them well, water with soda, ensuring better capture of the smallest particles contained in the smoke and the neutralization of acid and chlorinated compounds.

7. Solid urban waste controlled self-combustion system, according to claim 1, characterized because the double wall cyclone (25) where the vaporized mix of gases/water which are loaded with particles enter, is made up of a double wall to which cold water has access through the pipe (26) to cool the inner wall of the cyclone (25) to the maximum and so attract the particles of the smoke and provoke maximum condensation of the vapor; between the two walls which make up the body of the cyclone (25) there is a spiral which allows the circulation from top to bottom of the water, which will be heated and which can be used for other purposes, so that the possibility of increasing or decreasing the temperature of the transmitting fluid permits increasing the kinetic reactions.

8. Solid urban waste controlled self-combustion system, according to claim 1, characterized because in the mouth of the cyclone (25) a zigzag passage has been foreseen for decanting the sludge which reaches the decanting tank (31), with the aim of recycling the water in the cleaning circuit by means of a pump (22).

9. Solid urban waste controlled self-combustion system, according to one of the previous claims, characterized because between the turbo-washer-extractor (24) and the cyclone (25) there is a separator of drops/economizer of water, formed by a cylindrical body with a double wall (46); between the walls there is a helix (50) for distribution of the water, whereas in the entrance (45) of the said cylindrical body there is a fixed helico-centrifugal wheel (49) which rotates the corresponding gases in the chamber (51) thus producing condensation when they enter into contact with the internal wall (53), cooled due to the circumferential circulation of cold water in the double wall (46); the separator of drops/economizer of water also having a corresponding entrance for cold water (47), an exit for hot water (54) and an exit (52) for the condensed vapor.

## Patentansprüche

1. Selbstbrennsystem für städtischen Feststoffabfall, welche eine Anlage mit geringen Kapazitäten zur "Vor-Ort-"Verbrennung von städtischem Feststoffabfall darstellt und heißes Wasser oder Luft hervorbringt, Gase durch die Wiederverwertung von Reinigungswasser reinigt und Metalle und Glas zur Wiederverwertung auffindet, wobei dieses System einen Ofen oder eine Selbstbrennkammer (1) mit einer doppelten Wandung X in vertikaler Position und mit zwei konisch geformten Rumpfbereichen als Verlängerung der Wände enthält, wobei ein oberer konisch geformter Rumpfbereich (3) Rauch und Gase ablassen sowie den Abfall zur Verbrennung einlässt und trocknet und ein weiterer unterer konisch geformter Rumpfbereich (4) mit einem Boden, an welchem eine Tür (40) vorgesehen ist, welche sich zum Abtransport des verbrannten Abfalls oder der Asche öffnet, welche in einem Aufnahmetank (41) gesammelt werden, welcher ein vibrierendes Sieb enthält; wobei die Selbstbrennung in der Kammer (1) stattfindet und durch einen vorgeheizten Verbrennungsluftstrom aus einem kreisförmigen Temperaturwechsler (12), welcher um einen vertikalen Gasabkühl- und -reinigungsturm (17) am Ausgang aus einer Nachbrennkammer (9) angeordnet ist, welche horizontal im oberen Bereich des Ausgangskegels (3) angeordnet ist; wobei die Kammer (1) durch einen Ventilator (13) mit Verbrennungsluft versorgt wird, welche durch einen Mund (14) in einen Durchgang aus den doppelten Wandungen des Ofens oder der Kammer (1) eindringt, wobei die Verbrennungsluft durch Löcher (15) im unteren Kegel (4) in die Brennkammer eindringt; wobei der Nach-Brennkammer (9) ein Turbo-Reinigungs-Extraktionsapparat (24) nachgeordnet ist, an dessen Ende sich ein Doppelzyklon befindet, der in einen Kamin mündet, während das Wasser aus dem Turbo-Reinigungs-Extraktionsapparat, welches mit Partikeln und Staub versetzt ist, in einen Abfülltank oder Container (31) geschüttet wird, in welchem der Schlamm in einem Aufnahmebehälter oder Container (30) mit Auswechsler-Trockner (32) gesammelt wird.

2. Selbstbrennsystem für städtischen Feststoffabfall nach Anspruch 1, dadurch gekennzeichnet, dass kaltes Wasser aus dem Netzwerk durch die Brennkammer oder den Ofen (1) durch ein Rohr (37) und mit Eingang durch ein allgemeines Rohr (36) in eine Reihe von Rohren (34) geleitet wird, welche durch einen Ausgang (38) in ein allgemeines Rohr (35) münden und drei Ziele aufweisen:
- Schutz der Rohre an sich zu gewährleisten;
- Temperaturanstiege im Brennofen einzuschränken;
- des Weiteren heißes Wasser zuproduzieren, welches für andere Zwecke verwendet werden kann.

3. Selbstbrennsystem für städtischen Feststoffabfall nach Anspruch 1, dadurch gekennzeichnet, dass im oberen Kegel (3) ein Lademund (6) mit einer Art Förderwagen (7) mit rotierender halbzylindrischer Form auf einer Achse (8) vorgesehen ist, wobei der Förderwagen den zu verbrennenden Abfall in Richtung der Innenseite der Kammer (1) ablädt, wobei dieser Abfall vor der Eingabe in die Kammer durch Gase, welche in Richtung der Nach-Brennkammer (9) aufsteigen, erhitzt und vorgetrocknet wird.

4. Selbstbrennsystem für städtischen Feststoffabfall nach Anspruch 1, dadurch gekennzeichnet, dass die Verbrennungsluft, welche durch den Ventilator (13) in den Ofen eingebracht wird, durch eine Wechsler (12) vorerhitzt wird, wobei ein Teil der Hitze der Brenngase genutzt wird, und von oben nach unten um die Brennkammer und den unteren Kegel herum zirkuliert, was zu einer Verbesserung der Widerstandsfähigkeit der Platte gegen mechanische Beschädigung durch Kühlen führt, wobei dem Brennofen eine Energiequelle geliefert wird und gute thermische Isolierung der Selbstbrennkammer erzielt wird.

5. Selbstbrennsystem für städtischen Feststoffabfall nach Anspruch 1, dadurch gekennzeichnet, dass die vorerhitzte Verbrennungsluft, welche in die Brennkammer (1) eingebracht wird, durch einen Ventilator (13) vorangetrieben wird, welcher durch Thermoelemente verbunden ist mit dem Körper des Ofens, wodurch es ermöglicht wird, dass die Temperaturen der Verbrennungs-und Austrittsluft in Übereinstimmung mit der geringeren Heizkraft des Abfalls reguliert werden.

6. Selbstbrennsystem für städtischen Feststoffabfall nach Anspruch 1, dadurch gekennzeichnet, dass im Kühl- und Reinigungssystem die Gase in zweierlei Weise gekühlt werden, nämlich zum Einen durch die Eingabe von kaltem Wasser in den Turm (17) durch Düsen (19), zum Anderen durch einen kreisförmigen Hitzewechsler für diesen Turm mit kalter Luft aus dem Ventilator (13), welche zirkuliert und beim Aufeinandertreffen mit der erhitzten Innenplatte durch die Gase erhitzt wird, während sie diese kühlt; wobei ebenfalls ein Turbo-Reinigungs-Extraktionsapparat und Staubentferner (24) vorgesehen ist, welcher sich durch die bloße Kraft des Reinigungswassers bewegt, die Gase aufsaugt und Wasser mit Soda gut mischt, wodurch eine bessere Aufnahme der kleinsten Partikel, welche im Rauch enthalten sind, und Neutralisierung von sauren und gechlorten Bestandteilen gewährleistet wird.

7. Selbstbrennsystem für städtischen Feststoffabfall nach Anspruch 1, dadurch gekennzeichnet, dass der doppelwandigen Zyklon (25), durch welchen die gedämpfte Mischung aus Gasen und Wasser, die mit Partikeln versetzt sind, eindringt, aus einer doppelten Wandung besteht, in welche kaltes Wasser durch das Rohr (26) eindringen kann um die Innenwandung des Zyklons (25) so stark wie möglich abzukühlen und so die Partikel aus Rauch anzuziehen und eine weitestgehende Kondensierung des Dampfes zu erzielen; wobei zwischen den beiden Wandungen, welche den Körper des Zyklons (25) darstellen, eine Spirale vorgesehen ist, welche Zirkulation des Wassers von oben nach unten ermöglicht, welches erhitzt wird und für andere Zwecke verwendet werden kann, so dass die Möglichkeit zur Erhöhung oder Verminderung der Temperatur der zuleitenden Flüssigkeit es gestattet, die kinetischen Reaktionen zu erhöhen.

8. Selbstbrennsystem für städtischen Feststoffabfall nach Anspruch 1, dadurch gekennzeichnet, dass im Mund des Zyklons (25) ein zick-zack-förmiger Durchgang zum Ablassen des Schlamms vorgesehen ist, welche den Abfülltank (31) erreicht und das Ziel hat, das Wasser im Reinigungskreislauf durch eine Pumpe (22) wiederzuverwerten.

9. Selbstbrennsystem für städtischen Feststoffabfall nach einem der vorhergehenden Ansprüche,
dadurch gekennzeichnet, dass zwischen dem Turbo-Reinigungs-Extraktionsapparat (24) und dem Zyklon (25) ein Tropfentrenner/Wassersparer vorgesehen ist, welcher durch einen zylindrischen Körper (46) mit doppelter Wandung gebildet ist; wobei zwischen den Wänden eine Spirale (50) zur Verteilung des Wassers vorgesehen ist, wobei im Eingang (45) des zylindrischen Körpers ein Rad (49) in der Mitte der Spirale befestigt ist, welches die entsprechenden Gase in der Kammer (51) durchmischt und hierdurch Kondensierung hervorruft, wenn diese in Kontakt mit der Innenwand (53) kommen, welche durch die kreisförmige Zirkulation kalten Wassers in der Doppelwandung (46) gekühlt wird; der Tropfentrenner/Wassersparer weist auch einen entsprechenden Eingang für kaltes Wasser (47) auf, einen Ausgang für heißes Wasser (54) und einen Ausgang (52) für die kondensierten Abgase.

## Revendications

1. Système d'auto-combustion contrôlée pour résidus solides urbains constituant une installation à faible capacité pour l'incinération "in situ" de résidus solides urbains, avec production d'eau ou air chaud, lavage de gaz avec recyclage des eaux de lavage et récupération des métaux et du verre pour leur recyclage postérieur. Le système comprend un four ou chambre d'auto-combustion (1) à double paroi disposé verticalement et doté de deux tronçons tronconiques agissant comme prolongement de ses bases, l'un partie supérieur cyclone(3) pour la sortie des fumées et gaz ainsi que pour l'entrée et le séchage des résidus à brûler, et l'autre partie inférieur cyclone(4) avec son fond doté d'une porte s'ouvrant (40) pour l'évacuation de résidus brûlés ou scories, lesquels sont recueillis dans un réservoir de réception (41) qui comprend un tamis vibrant; l'auto-combustion a lieu dans la chambre (1) etant rehaussée par un courant d'air comburent pré-chauffé venant d'un interchangeur (12) de température autour d'une tour verticale de refroidissement et lavage des gaz à la sortie d'une chambre de post-combustion (9) prévue horizontalement dans la partie supérieure du cône de sortie (3), la chambre (1) de combustion est alimentée par un ventilateur (13) et accède à travers une bouche (14) dans le passage (2) formé de la double paroi du four ou chambre (1). Cet air s'introduit ensuite à travers des orifices (15) dans la partie inférieure du cône (4), suivant la chambre de post-combustion (9 )il y a un turbo-laveur-extracteur (24) à la sortie duquel se trouve un double cyclone qui donne sur une cheminée alors que l'eau chargée qui provient du turbo laveur extracteur de particules et poussières débouche dans un réservoir ou container de décantation (31) où les boues sont recueillies dans un récipient ou réservoir (30) muni d'un interchangeur-séchoir (32).

2. Système d'auto-combustion contrôlée pour résidus solides urbains, conformément à la revendication 1°, dont la caractéristique réside dans le fait que l'eau froide provenant du réseau passe à travers la chambre de combustion (1) ou four au moyen d'une conduite (37), a l'entrée d'un certain nombre de conduits (34) dans une conduite commune (36), lesquels débouchent dans un conduit commun (35) à travers une sortie (38), poursuivant trois objectifs:
- Assurer la protection des propres conduits
- Limiter l'augmentation de la température dans le foyer, et, en outre,
- Produire de l'eau chaude pour que celle-ci puisse être mise à profit pour d'autres utilisations.

3. Système d'auto-combustion contrôlée pour résidus solides urbains, conformément à la revendication 1., caractérisé par le fait que dans le cône supérieur, a été prévue (3)une bouche de chargement (6) grâce à une sorte de wagonnet (7)à la forme semi-cylindrique et tournant sur un axe (8). Le wagonnet décharge les résidus à brûler vers l'intérieur de la chambre (1), ces résidus étant soumis, avant d'entrer dans la chambre, à un chauffage et pré-séchage grâce aux gaz qui montent vers la chambre de post-combustion (9).

4. Système d'auto-combustion contrôlée pour résidus solides urbains, conformément à la revendication 1., caractérisé par le fait que l'air comburent proportionné dans le four au moyen du ventilateur (13) est pré-chauffé grâce à un interchangeur (12), en utilisant une partie de la chaleur des gaz de combustion; il circule de haut en bas autour de la chambre de combustion et le cône inférieur, ce qui a pour conséquence d'améliorer la résistance mécanique de la tôle par refroidissement, fournir une source énergétique au foyer et provoquer une bonne isolation thermique de la chambre d'auto-combustion.

5. Système d'auto-combustion contrôlée pour résidus solides urbains, conformément à la revendication 1., caractérisé par le fait que l'air comburent pré-chauffé qui entre dans la chambre de combustion (1) est poussé au moyen d'un ventilateur
(13) thermocouplé par le propre corps du four, permettant de réguler la température de la combustion et le surplus d'air, en fonction du pouvoir calorifique inférieur des résidus.

6. Système d'auto-combustion contrôlée pour résidus solides urbains, conformément à la revendication 1., caractérisé par le fait que dans la tour de refroidissement et lavage, les gases sont refroidis par l'injection d'eau froide de 2 façons differentes, dans la tour de lavage(17) à travers des embouchures (19), l'autre au moyen d'un interchangeur périphérique de température entourant la tour de l'air froid provenant du ventilateur (13), qui circule et est chauffé au contact de la tôle intérieure chauffée par les gaz en même temps qu'il refroidit ces derniers. Il existe également un turbo-laveur-extracteur et dépoussiéreur (24) qui ne bouge qu'en utilisant la force de l'eau de lavage, en aspirant les gaz et les mélangeant bien (eau et soude), assurant ainsi une meilleure captation des plus petites particules contenues dans les fumées et la neutralisation des composés acides et chlorés.

7. Système d'auto-combustion contrôlée pour résidus solides urbains, conformément à la revendication 1., caractérisé par le fait que le cyclone (25), à l'intérieur duquel pénètre le mélange gaz/eau vaporisé chargée de particules, est formé d'une double paroi où l'eau froide accède à travers le conduit (26), afin de refroidir au maximum la paroi interne du cyclone (25) et, ainsi, attirer les particules contenues dans les fumées et provoquer la condensation de la vapeur maximum; entre les deux parois qui forment le corps du cyclone (25) est située une hélice qui permet la circulation, de haut en bas, de l'eau qui va être chauffée et réutilisée pour d'autres utilisations.

8. Système d'auto-combustion contrôlée pour résidus solides urbains, conformément à la revendication 1., caractérisé par le fait que dans l'embouchure du cyclone (25) a été prévu un passage en zig-zag pour la décantation des boues qui parviennent au réservoir de décantation (31), afin de procéder au recyclage de l'eau dans le circuit de lavage au moyen de la pompe (22).

9. Système d'auto-combustion contrôlée pour résidus solides urbains, conformément à la revindication 1, caractérisé par le fait que,le turbo laveur extrateur (24) et le cyclone (25) il y a un separateur de gouttes, economiseur d'eau, formé par un corps cyclindrique avec une double paroi (46); entre les parois il ya une hélice (50)pour la répartion de l'eau, tandis qu'à l'entrée (45) du corps cylindrique il y a un helice fixe hélicoïdal (49) qui permet la rotation des gases dans la chambre (51) qui produisent una condensation losqu'ils rentrent en contact avec la paroi interne (53), refroidi par la circulation périphérique de l'eau froide dans la double paroi (46); el separateur economiseur d'eau a également une entrée pour l'eau froide (47), une sortie pour l'eau chaude (54) et une sortie (52) pour la vapeur condensée.
